Europäisches Patentamt

(19) European Patent Office

Office européen des brevets

(11) Publication number: **0 105 125**
**B1**

(12) **EUROPEAN PATENT SPECIFICATION**

(45) Date of publication of patent specification: **19.04.89**

(21) Application number: **83107655.9**

(22) Date of filing: **03.08.83**

(51) Int. Cl.⁴: **G 06 F 15/06, G 06 F 9/38**

(54) Data processing system.

(30) Priority: **03.09.82 JP 154141/82**
**10.12.82 JP 215421/82**

(43) Date of publication of application:
**11.04.84 Bulletin 84/15**

(45) Publication of the grant of the patent:
**19.04.89 Bulletin 89/16**

(84) Designated Contracting States:
**DE FR GB**

(56) References cited:
**EP-A-0 022 274**
**EP-A-0 042 442**

**3rd USA-JAPAN COMPUTER CONFERNCE PROCEEDINGS, 10th-12th October 1978, pages 369-373, San Francisco, California, US, K. UCHIDA et al.: "The FACOM 230-75 array processor system"**

(73) Proprietor: **HITACHI, LTD.**
**6, Kanda Surugadai 4-chome Chiyoda-ku Tokyo (JP)**

(72) Inventor: **Kawabe, Shun**
**1344-3, Aihara**
**Machida-shi (JP)**
Inventor: **Odaka, Toshihiko**
**1640-11, Kokubu**
**Ebina-shi (JP)**

(74) Representative: **Patentanwälte Beetz sen. - Beetz jun. Timpe - Siegfried - Schmitt-Fumian Steinsdorfstrasse 10**
**D-8000 München 22 (DE)**

(56) References cited:
**IEEE TRANSACTIONS ON COMPUTERS, vol. C-23, no. 8, August 1974, pages 808-819, New York, US, G.L. KRATZ et al.: "A microprogrammed approach to signal processing"**

## Description

The present invention relates to a data processing system according to the precharacterising part of claim 1.

When the scientific computation expressed in simultaneous partial differential equations and the like is processed numerically by using a computer, the problem, in many cases, is reduced to simultaneous linear equations within the computer, which frequently handles matrix and vector computation. On this account, processors designed for scientific computation incorporate a vector processing unit to process the scientific computation at a high speed.

The conventional high-speed vector processing unit basically falls into two types of vector processing systems. One type of vector processing system is the functional "pipeline" system, in which a functional unit provides the output at a specific clock interval and operates continuously. Another type of vector processing system is the parallel processing system, in which a plurality of functional units process separate vector elements in parallel.

The functional pipeline system can speed up the process by making the clock interval shorter which, however, largely depends on the operating speed of circuit components. On the other hand, the parallel processing system can speed up the process by increasing the number of functional units which, however, is limited from the packaging density of circuit components and the total size of the system. However, the recent advanced hardware technology has brought a significant improvement in the operating speed of circuit components and their packaging density, thus resulting in a shorter clock interval and increased number of functional units connected in parallel.

Many of scientific computation are reduced to matrix or vector computation for simultaneous linear equations as mentioned above, however, not all of computer programs for solving scientific problems, are used for matrix or vector computation, but a process for obtaining coefficient matrices of simultaneous linear equations is an example of processing portions which are not reduced to matrix or vector computation. In the following discussion, computation handling matrices or vectors is simply termed "vector computation" and the processing by the means for processing the vector computation is simply termed "vector processing". A scientific computational program includes a portion which can be treated as a vector processing and the other portion which cannot be treated like that, and their proportion depends, in one aspect, on the scientific computational problem itself and, in another aspect, on techniques of programming. The latter portion which cannot be treated as vector processing needs to be processed sequentially as in the case of problems handled by a general-purpose processor, and such processing will now be termed "scalar processing".

The conventional scientific computation oriented processor designed to perform high-speed vector computation has a common unit for vector computation and scalar computation, or has separate units for vector computation and scalar computation. However, owing to the advanced parallel processing technology and pipeline processing technology as mentioned above, the speed of vector processing has been improved significantly to an extent of 10 to 100 times that of scalar processing which is carried out by sequential computation. Therefore, the scalar processing speed is becoming an important factor. For example, assuming a scientific computation including 90% vector processing, even if the vectorial portion is processed 100 times faster than scalar processing, the total processing speed including 10% scalar processing is merely 10 times faster than the case of handling the entire computation by scalar processing.

To break through the problem, it is necessary to speed up the scalar processing. However, the scalar processing is basically a sequential processing, and the improvement of the processing speed is limited. See, for example, a literature of Rechard. M. Russel "The Cray-1 Computer System" in "Communications of the ACM" 1978, JAN. Vol. 21, No. 1, pp 63-72.

The EP-A-42 442 discloses an information processing system including an arithmetic unit in which an item of data is processed according to one instruction, another arithmetic unit in which plural items of data are processed according to one instruction, an instruction control unit for distributing corresponding instruction groups to respective ones of the arithmetic unit and a main memory for exchanging data with the instruction control unit and with both arithmetic units. In this prior art information processing system a group of instructions among the above-mentioned groups of instructions, which group is restricted by the order of priority as to the execution sequence thereof, is synchronized by specially inserting a synchronization instruction (WAIT). It is also possible to divide the above-mentioned groups of instructions into a group of instructions to be serially processed and a group of instructions capable of being parallel processed as to the execution sequence thereof, by inserting a serialization-start instruction (POST) and a serialization-release instruction (SUB-WAIT). There is no disclosure in the EP-A-42 442 of any means to match the processing capability of scalar operation with said of vector operation and to provide a plurality of scalar processing means in combination with one vector processor so that the processing capability of scalar operation which is slower than the processing speed of vector operation can be matched with the processing capability of the vector operation.

Accordingly, it is an object of the present invention to match the processing capability of scalar operation, having slower processing speed than the vector operation, with the processing capability of the vector operation, while leaving the current processing speed of the scalar processing means.

To achieve the above object a data processing system comprising a main memory, scalar processing means connected to said main memory for performing scalar operations, said scalar processing means including instruction storage means holding instructions read from said main memory, and at least one scalar instruction execution unit, said instruction storage means including means providing control information for performing vector operations, and vector processing means connected to said main memory and said scalar processing means and performing vector operations based on said control information received from said scalar processing means,

is, according to the invention, characterized in that said vector processing means are connected to a plurality of scalar processing means and said vector processing means include:

a plurality of groups of vector registers, each group including a plurality of vector registers, the number of said groups being equal to the number of said plurality of scalar processing means, each group of vector registers forming means for holding a plurality of vector elements,

arithmetic and logic operation means, buffer means for buffering control information from said plurality of scalar processing means,

execution control means controlling vector operations on the basis of control information read from said buffer means including information for identifying the scalar processing means which has issued the control information,

connection control means controlling on the basis of the control information including said identifying information from said execution control means,

(a) the connection between at least a specified one of said vector registers and said arithmetic and logic means so as to execute vector operations based on said control information, and

(b) the connection between a selected one of said plurality of vector registers and said main memory so as to transfer said vector elements between said main memory and the vector registers, and

address means including a plurality of groups of address registers and increment registers each group including a plurality of vector address registers and increment registers,

the number of said groups being equal to the number of said scalar processing means, said vector address registers holding addresses of said main memory for transferring vector elements between said main memory, and said selected vector registers, said increment registers holding values for incrementing the addresses in said vector address registers,

said address means providing said main memory with an address in said vector address register

designated on the basis of said control information including said identifying information and incrementing the content of said vector address register by the content of said increment register designated on the basis of said control information including said identifying information, according to claim 1.

The sub-claims 2 to 4 each include advantageous developments of the subject matter of claim 1.

Embodiments of the present invention will be described in conjunction with the accompanying drawings in which

Fig. 1 is a systematic diagram showing one embodiment of the present invention;

Fig. 2 is a block diagram showing the vector processor shown in Fig. 1;

Fig. 3 is a diagram showing the format of a vector command issued by the command execution decision circuit 53 in Fig. 2;

Figs. 4, 5, 6 and 7 are schematic diagrams showing the buffer selection circuit, vector register selection circuit, functional unit selection circuit and adder selection circuit, respectively, within the command execution decision circuit 53;

Figs. 8 and 9 are block diagrams showing the link path selection circuits 64 and 65, respectively, in Fig. 2;

Fig. 10 is a schematic diagram showing another example of the selection signal generator 71 shown in Fig. 4; and

Figs. 11, 12, 13 and 14 are block diagram showing other embodiments of the present invention.

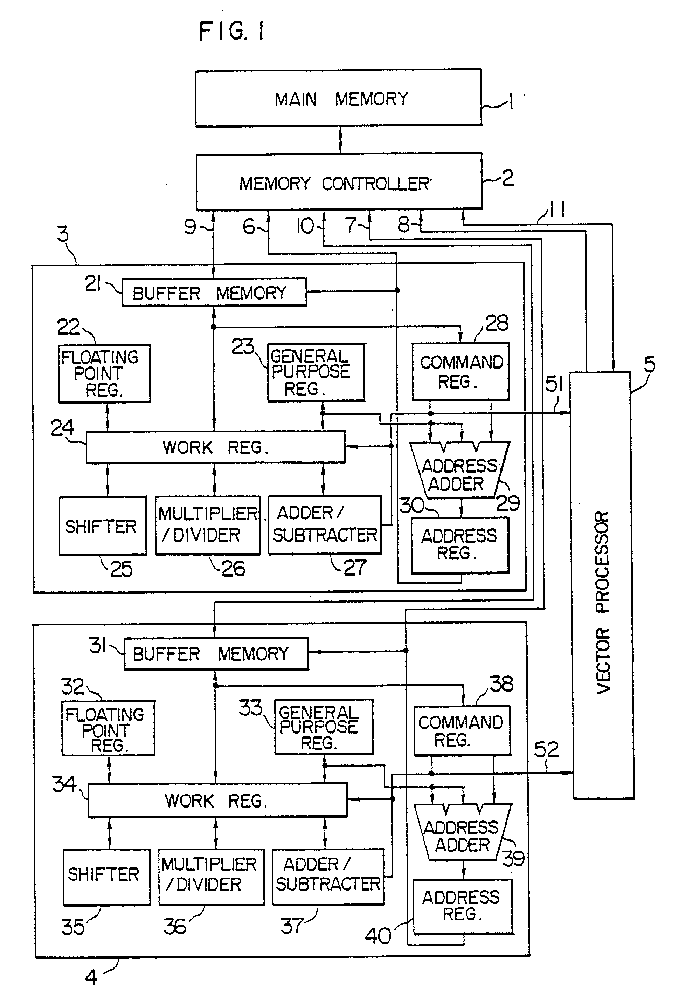

In Fig. 1 showing the inventive arrangement applied to a processor designed for scientific computation, the processor comprises a main memory 1, a memory controller 2, scalar processor units 3 and 4 each executing a scalar operation, and a vector processor unit 5 executing a vector operation. The scalar processor units 3 and 4 are arranged to perform multiplexed processings so as to achieve the scalar processing capability which matches the high-speed processing capability of the vector processor unit 5. The scalar processor units 3 and 4 handle separate tasks, and if vectorial processing is needed during the task in each scalar processor unit, it is handed over to the vector processor unit 5.

The memory controller 2, scalar processor units 3 and 4, and vector processor unit 5 are linked with each other through address signal lines 6, 7 and 8, and data signal lines 9, 10 and 11. The scalar processor unit 3 or 4, or the vector processor unit 5 issues a memory access request to the memory controller 2 when it needs to read or write the main memory 1 during the process. The memory controller 2 permits one of memory access requests issued by processors according to a predetermined priority rule, and sets up a communication path between the permitted processor and the main memory 1. For a memory write request, the main memory 1 stores a given data in a specified address, and for a memory read request, the main memory 1 reads out data from the specified address.

The scalar processor units 3 and 4 are made up of respective buffer memories 21 and 31, floating point registers 22 and 32, general purpose registers 23 and 33, working registers 24 and 34, shifters 25 and 35, multiplier/dividers 26 and 36, adder/subtracters 27 and 37, command registers 28 and 38, address adders 29 and 39, and address registers 30 and 40, respectively. Such an arrangement for the scalar processor units 3 and 4 is well known by those skilled in the art in such as a general-purpose processor and further explanation thereof will be omitted.

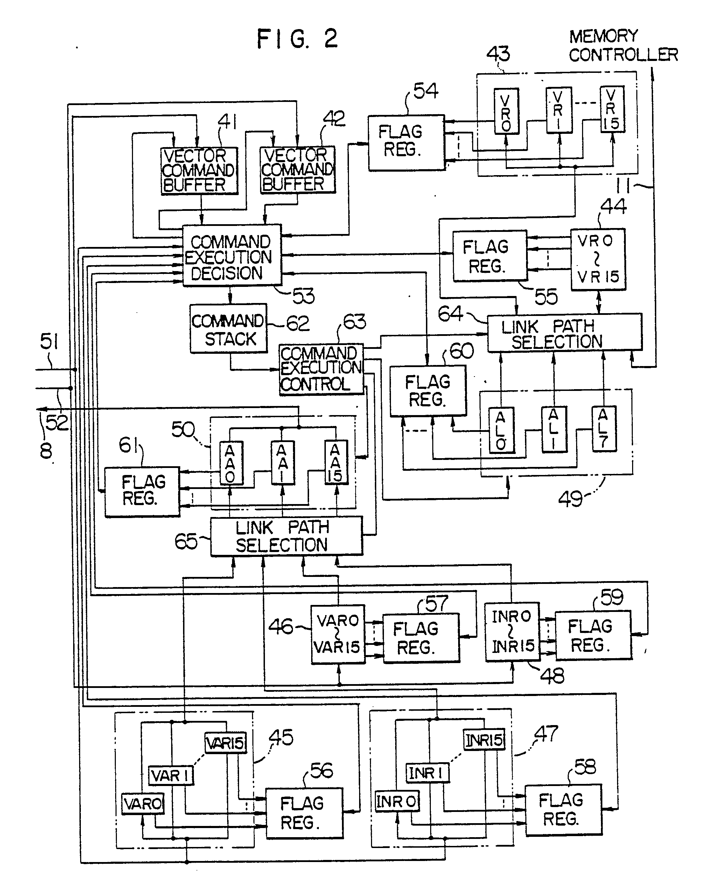

The vector processor 5 comprises, in correspondence to the scalar processor units 3 and 4, vector command buffers 41 and 42, vector register groups 43 and 44, vector address register groups 45 and 46, increment registers 47 and 48, and functional unit group 49 and address adder group 50 which are used commonly for the scalar processor units 3 and 4, as shown in detail in Fig. 2. Each of the vector register groups 43 and 44 (only 43 is shown in detail) is made up of 16 vector registers VR0-VR15 each storing 64 vector elements. Each of the vector address register groups 45 and 46 (only 45 is shown in detail) is made up of 16 vector address registers VAR0-VAR15. Each of the increment register groups 47 and 48 (only 47 is shown in detail) is made up of 16 increment registers INR0-INR15. The functional unit group 49 includes eight pipelined functional units AL0-AL7 each having a function such as addition, multiplication or division. The address adder group 50 includes 16 pipelined adders AA0-AA15.

The scalar processor units 3 and 4 share the main memory 1 and operate in multiplex mode as in the conventional multiplex processor system.

First, execution of the following program by the scalar processor unit 3 will be considered.

DO 10 I=1,100
10 A(I)=(B(I)+C(I)

This program is expanded in machine word into one Load Increment (LIN) command, three Load Multiple Address (LMA) commands and one Execute Vector Processor. (EXVP) command, and these commands in machine word are executed by the scalar processor unit 3 as follows.

LIN INR0, INR2, INR4
: Load increment registers INR0, INR2 and INR4 with respective constants.

LMA VAR0
: Load vector address register VAR0 with the leading address of matrix A.

LMA VAR2
: Load vector address register VAR2 with the leading address of matrix B.

LMA VAR4
: Load vector address register VAR4 with the leading address of matrix C.

EXVP X
: Read out a command string in address X of the main memory 1 and transfer it to the vector processor unit 5, then activate the vector processor unit 5.

By the execution of the above commands, address control data related to the matrices A, B and C are loaded to the vector address register group 45 and increment register group 47 within the vector processor unit 5, and a vector command string is read out of the main memory 1. The vector command string is made up of two Load Vector Register (LVR) commands, one Vector Elementwise Add (VEA) command and one Store Vector Register (STVR) command as follows.

LVR VR2, VAR2, INR2
: Set up the address of the main memory 1 based on the leading address of matrix B stored in the vector address register VAR2 and the constant stored in the increment register INR2, then read out data for the matrix B from the main memory and load it to the vector register VR2. The constant is used for incrementing the address.

LVR VR4, VAR4, INR4
: set up the address of the main memory 1 based on the leading address of matrix C stored in the vector address register VAR4 and the constant stored in the increment register INR4, then read out data for the matrix C from the main memory and load it to the vector register VR4.

VEA VR6, VR2, VR4
: Read out data for matrices B and C from the vector registers VR2 and VR4, respectively, then add both data and store the result in the vector register VR6.

STVR VR6, VAR0, INR0
: Read out data from the vector register VR6, and store it in the main memory 1 by setting up the address using the leading address of matrix A and the constant stored in the vector address register VAR0 and increment register INR0.

These vector commands are sent through the command register 28 and signal line 51 to the vector command buffer 41 in the vector processor unit 5. The vector command buffer 41 is of the first-in-first-out (FIFO) type.

At the same time, the scalar processor 4 is assumed to execute the following program.

DO 10 I=1, 100
10 D(I)=E(I)*F(I)

This program is expanded in machine word into one Load Increment (LIN) command, three Load Multiple Address (LMA) commands and one Execute Vector Processor (EXVP) command, and executed by the scalar processor unit 4 as follows.

LIN INR1, INR3, INR5
: Load the increment registers INR1, INR3 and INR5 with respective constants.

LMA VAR1
: Load the vector address register VAR1 with the leading address of matrix D.

LMA VAR3
: Load the vector address register VAR3 with the leading address of matrix E.

LMA VAR5

: Load the vector address register VAR5 with the leading address of matrix F.

EXVP Y

: Read out a command string in address Y of the main memory 1 and transfer it to the vector processor unit 5, then start or activate the vector processor unit 5.

By the execution of these commands, address control data related to the matrices D, E and F are loaded to the vector address register group 46 and increment register group 48 within the vector processor unit 5, and a vector command string is read out. The vector command string is made up of two Load Vector Register (LVR) commands, one Vector Elementwise Multiply (VEM) command and one Store Vector Register (STVR) command as follows.

LVR VR3, VAR3, INR3

: Set up the address of the main memory 1 based on the leading address and constant for matrix E stored in the vector address register VAR3 and increment register INR3, then read out data for the matrix E in the memory location and load it to the vector register VR3.

LVR VR5, VAR5, INR5

: Set up the address of the main memory 1 based on the leading address and constant for matrix F stored in the vector address register VAR5 and increment register INR5, then read out data for the matrix F in the memory location and load it to the vector register VR5.

VEM VR7, VR3, VR5

: Read out data for matrices E and F from the vector registers VR3 and VR5, respectively, and multiply both data, then load the result to the vector register VR7.

STVR VR7, VAR1, INR1

: Read out data from the vector register VR7 and store it in the main memory 1 by setting up the address based on the leading address and constant for matrix D stored in the vector address register VAR1 and increment register INR1.

These commands are sent through the command register 38 and signal line 52 to the vector command buffer 42 in the vector processor unit 5. The vector command buffer 42 is also of the FIFO type.

The operation of the vector processor unit 5 is now described. The command execution decision circuit 53 fetches vector commands from the vector command buffers 41 and 42 alternately where the vector command has been entered as described above, and checks whether or not each command is executable. The vector register groups 43 and 44, vector address register groups 47 and 48, functional unit group 49, and address adder group 50 are provided with respective flag registers 54-61 indicating on their flags whether individual registers, functional units and adders are busy. Referring to the flag registers 54-61, the command execution decision circuit 53 checks if the registers specified by the fetched vector command, the functional units needed for the vector command and the adders are free, and determines the vector command to be executable if all of the necessary circuit units are found free. Then, the decision circuit 53 sets the flags for the registers, functional units and adders used for the vector command, to indicate that they are now busy, and transfers the vector command to a command stack 62 of the FIFO type. If, on the other hand, any of the necessary circuit units is found busy, the decision circuit 53 determines the vector command to be inexecutable and restores it to the vector command buffer 41 or 42 where the command has be taken from. Upon completion of the executable or inexecutable determination for one vector command, the command execution decision circuit 53 fetches another vector command from the vector command buffer 41 or 42, and performs the same determining operation. Thus, the command stack 62 stores executable vector commands taken from the vector command buffers 41 and 42.

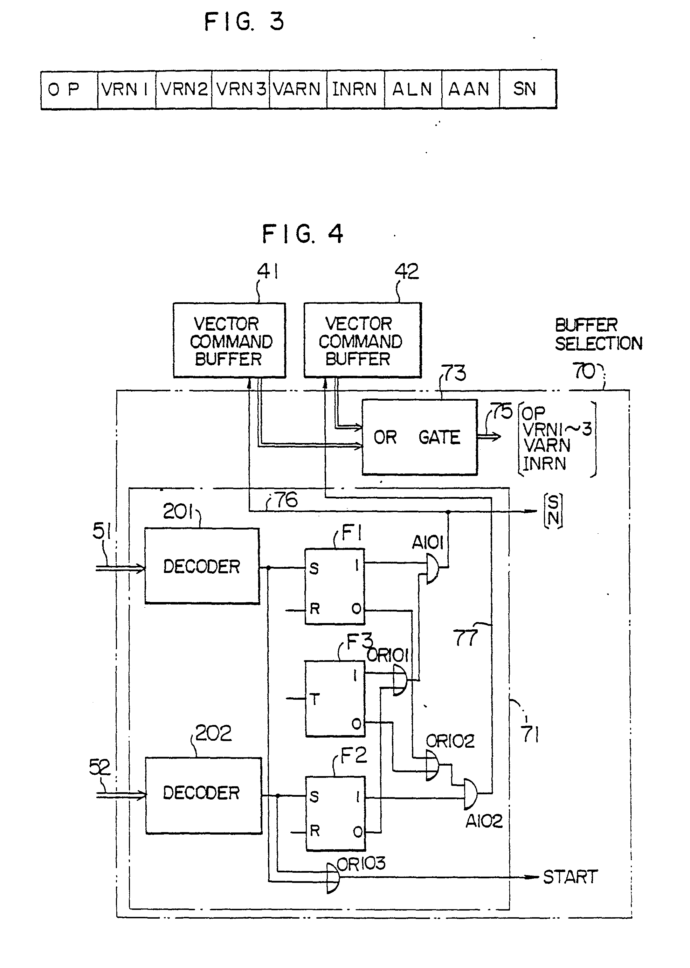

Fig. 3 shows the format of a vector command sent from the command execution decision circuit 53 to the command stack 62. In the Figure, OP denotes an operation code indicating the type of arithmetic/logic operation, VRN1-VRN3 are vector register descriptors for specifying vector registers, VARN is a descriptor for specifying a vector address register, and INRN is a descriptor for specifying an increment register. For some vector commands which do not use the vector address register (e.g. VEA command), the corresponding descriptor does not exist. In the following discussion, all of VRN1-VRN3 are used unless otherwise stated.

The OP, VRN1-VRN3, VARN, and INRN have the contents which have been sent from the vector command buffer 41 or 42. ALN and AAN are newly added by the command execution decision circuit 53, and are descriptors for specifying the functional unit and address adder corresponding to the flags set by the decision circuit 53. SN is a descriptor for indicating which vector command buffer, i.e., which scalar processor unit, the vector command has been sent from, and it is also newly added by the command execution decision circuit 53. Vector commands stored in the command stack 62 are sent to the command execution control circuit 63 one at a time. A vector command sent to the command execution control circuit 63 is executed immediately since all hardware resources necessary for the execution are reserved.

In case the command to be executed is the LVR or STVR command, the command execution control circuit 63 sends one of OP and VRN1-VRN3 (the LVR and STVR commands use only one vector register, and it is assumed to be specified by VRN1) and SN to the link path selection circuit 64, and sends VARN, INRN, AAN and SN to the link path selection circuit 65. The link path selection circuit 64 selects a path between one of vector registers specified by VRN1 of a scalar processor unit specified by SN and the signal line 11, and enables the selected path. The link path selection circuit 65 selects paths between one of address adders 50 specified by AAN and ones of vector address registers and increment registers specified by VARN and INRN, respectively, of a scalar processor specified by SN, and enables the selected paths. Thereafter, the command execution control circuit 63 activates an adder in the address functional unit group 50 specified by AAN, so as to provide an address on the signal line 8 to the memory controller 2. In this way, data in the main memory 1 is read out through the memory controller 2 and the signal line 11 to a vector register, or data is transferred in the opposite direction.

When the vector command to be executed is the VEA or VEM command. the command execution control circuit 63 sends OP, VRN1-VRN3, ALN and SN to the link path selection circuit 64. The link path selection circuit 64 selects paths between three vector registers specified by VRN1-VRN3 of a scalar processor specified by SN and one of the functional units 49 specified by ALN, and enables the selected paths. Then, the command execution control circuit 63 activates one of functional units 49 specified by ALN, and stores the result of arithmetic operation in one of the vector registers specified by a given one of VRN1-VRN3.

The link path selection circuits 64 and 65 can enable a plurality of paths at the same time. Thus, the command execution control circuit 63 starts to execute vector commands fed from the command stack one after another, and a plurality of vector commands are executed concurrently.

The commands LVR, VR2, VAR2, INR2, LVR, VR4, VAR4, and INR4 issued by the scalar processor unit 3, and the commands LVR, VR3, VAR3, INR3, LVR, VR5, VAR5, and INR5 issued by the scalar processor unit 4 use vector registers, vector address registers and increment registers of different groups, and therefore they can be executed simultaneously if only adders in the address adder group 50 are free. Similarly, the commands VEA, VR6, VR2 and VR4, and commands VEM, VR7, VR3 and VR5 use different vector registers and arithmetic/logic (functional) units, and they can be executed simultaneously.

Figs. 4 through 7 show in detail the circuits incorporated in the command execution decision circuit 53. In the Figures, a bold line represents a plurality of bit lines and a single line represents a bit line. An AND gate and OR gate having bold input and output lines represent a plurality of AND gates and OR gates.

Fig. 4 shows the buffer selection circuit 70 for fetching a vector command selectively from the vector command buffer 41 or 42. The circuit includes a selection signal generating circuit 71 providing complementary signals ("1" and "0", or "0" and "1") for signal lines 76 and 77, and an OR gate 73. The selection signal generating circuit 71 comprises decoders 201 and 202 which decode the signals on signal lines 51 and 52 and provide respective outputs when the input signals indicate the activation of the vector processor unit 5, flip-flops F1 and F2 provided for the scalar processor units 3 and 4, respectively, a triggerable flip-flop F3 which reverses the state each time a signal is applied to its T terminal, AND gates A101 and A102 with their output terminals connected to the signal lines 76 and 77, respectively, and OR gates OR101, OR102 and OR103. The triggerable flip-flop F3 receives a signal at its T terminal each time the determination of execution for one vector command has completed.

The buffer selection circuit 70 operates as follows. When the scalar processor unit 3 issues the above-mentioned activation signal, the START signal for initiating the operation of the vector processor unit 5 is outputted from the OR103 and, at the same time, the flip-flop F1 is set. The AND gate 101 is enabled on condition that the triggerable flip-flop F3 is set or the flip-flop F2 is reset, then signals "1" and "0" are outputted on the signal lines 76 and 77, respectively. The vector command buffer 41 is given "1" through the signal line 76 so that a vector command to be processed is taken out of it.

This state continues unless the vector processor activation signal is issued by the scalar processor unit 4, and vector commands are taken out of the vector command buffer 41 continuously. When the scalar processor unit 4 issues the activation signal, the flip-flop F2 is set. Thus, the remaining condition to enable the AND gate A101 is the setting of the triggerable flip-flop F3, and if it is reset, the AND gate A102 is enabled. When the A102 is enabled, the vector command buffer 42 is given "1" through the signal line 77, and a vector command to be processed is taken out of it. After the activation signal is issued by both of the scalar processor units 3 and 4, the vector command buffers 41 and 42 are selected alternately.

The vector command taken from the vector command buffer 41 or 42 is outputted on signal line 75 via the OR gate 73. The vector command on the signal line 75 has the same format as that when it is stored in the vector command buffer, i.e., OP, VRN1-VRN3, VARN and INRN as shown in Fig. 3. The signal appearing on the signal line 76 corresponds to SN in Fig. 3, which designates the scalar processor unit 3 by "1" or processor unit 4 by "0".

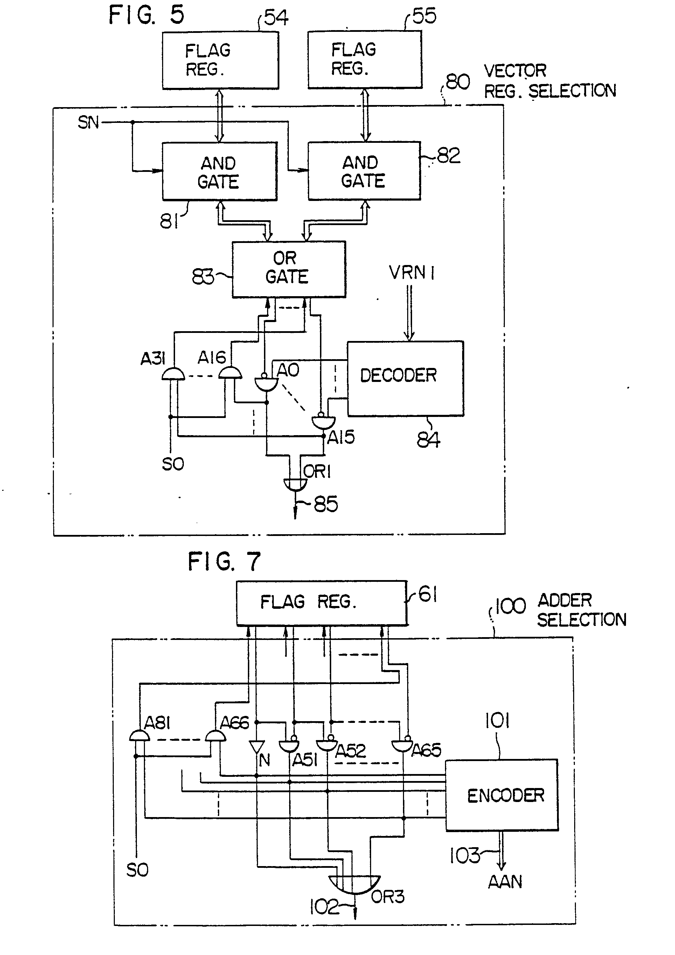

Fig. 5 shows the vector register selection circuit 80 which checks for the vacancy of the vector register specified by VRN1, VRN2 or VRN3 of the vector command, and selects it if it is free. The vector register selection circuit 80 is provided corresponding to each of VRN1, VRN2 and VRN3. The following describes one corresponding to VRN1. The circuit includes AND gates 81 and 82 which receive SN sent over the signal line 76 in Fig. 4, and an OR gate 83. These gates are designed to transmit the signal in both directions. The circuit further includes AND gates A0-A31 and a decoder 84 which analizes VRN1 sent over the signal line 75 in Fig. 4 and provides "1" to one of the A0-A15. The symbol "o" attached to the input of the gate indicates that the input signal is inverted at the input.

According to the circuit of Fig. 5, the OR gate 83 provides the outputs of flags in the flag register 54 or 55 when SN is "1" or "0" respectively. If the flag corresponding to the vector register specified by VRN1 is not set (i.e., the vector register is free) a signal is outputted on signal line 85. In this state, if signal S0 is given, a flag in the flag register 54 or 55 corresponding to the selected vector register is set through corresponding one of AND gates A16-A31.

The vector address register selection circuit, which checks for the vacancy of the vector address register specified by the vector command and selects it if it is free, and the increment register selection circuit, which checks for the vacancy of the increment register specified by the vector command and selects it if it is free, are also arranged in a similar manner to the circuit of Fig. 5, except that these circuits have flag register 56 or 58 in place of 54, and flag register 57 or 59 in place of 55, and have a decoder 74 to decode VARN or INR.

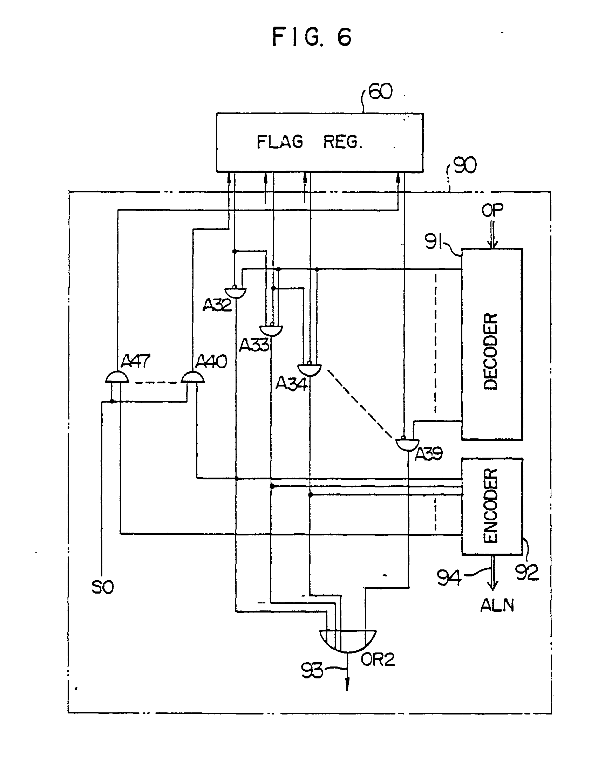

Fig. 6 shows the functional unit selection circuit 90 which checks for the vacancy of the unit for carrying out computation specified by OP of the vector command and selects it if it is free. The circuit includes AND gates A32-A47, an OR gate OR2, a decoder 91 for analizing OP sent over the signal line 75, and an encoder 92 which generates ALN depending on the output from one of the AND gates A32-A39. It should be noted that the decoder 91 has some outputs connected to a number of AND gates (A32-A34) so that these AND gates provide "1" in the order of priority. This means that there are provided a number of arithmetic/logic (functional) units for the same type of computation, and the units are assigned to computation in accordance with the predetermined priority order. The AND gate A32 has the highest priority and A34 has the lowest one.

According to the circuit of Fig. 6, if a flag in the flag register 60 corresponding to the functional unit for computation specified by OP (a higher ranking unit if more than one unit exists) is not set, a signal is outputted on the signal line 93 and ALN is sent out on signal line 94. In this state, if signal S0 is given, a flag in the flag register 60 corresponding to the selected functional unit is set through corresponding one of AND gates A40-A47.

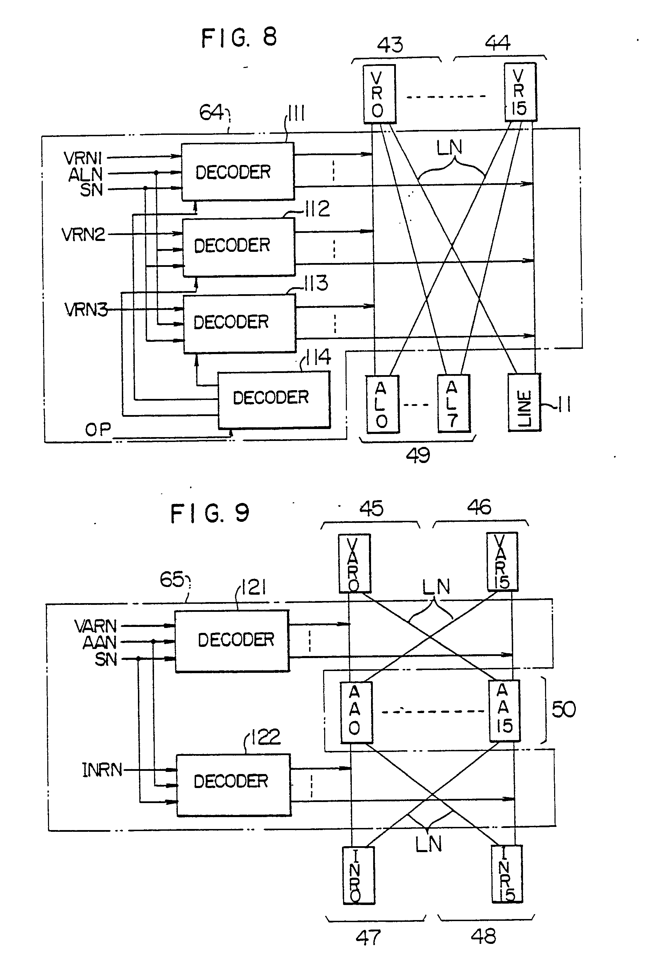

Fig. 7 shows the adder selection circuit 100 which selects a free adder in the address adder group 50. The adder selection circuit includes an inverter N, AND gates A51-A81, an OR gate OR3 and an encoder 101 which generates AAN depending on one of the outputs from the inverter N and gates A51-A65. It should be noted that the inverter N and AND gates A51-A65 are connected so that they provide "1" in accordance with the priority order. This means that the adders are assigned according to the priority order. In the Figure, the inverter N located at the left end has the highest priority, and the AND gates have lower ranks in left-to-right order.

According to the circuit of Fig. 7, if at least one adder is free, a signal is outputted on a signal line 102 through the gate OR3, and ANN corresponding to the selected adder is sent out over a signal line 103. In this state, if a signal S0 is given, a flag in the flag register 61 corresponding to the selected adder is set through corresponding one of AND gates A66-A81.

The command execution decision circuit 53 determines that the vector command is executable when the vector register selection circuit, vector address register selection circuit, increment register selection circuit, functional unit selection circuit and adder selection circuit provide "1" through the respective OR gates OR1, OR2 and OR3. The circuit 53 creates a vector command formatted as shown in Fig. 3 from signals received on signal lines 75, 76, 94 and 103, and sends it to the command stack 62. Then, the circuit 53 issues the S0 signal to set the related flags in the flag registers 54-61, and thereafter fetches a new vector command from the vector command buffer 41 or 42.

Fig. 8 shows in detail the link path control circuit 64. In the circuit, link paths LN are provided between all vector registers within the vector register groups 43 and 44 and both of all arithmetic/logic units within the functional unit group 49 and signal lines 11. The circuit includes decoders 111, 112 and 113 which decode VRN1, ALN and SN; VRN2, ALN and SN; and VRN3, ALN and SN, respectively, supplied from the command execution control circuit 63, and enable each one of the paths LN. The circuit further includes a decoder 114 which analizes OP supplied from the command execution control circuit 63, and provides a signal for enabling necessary ones of decoders 111-113.

Fig. 9 shows in detail the link path control circuit 65. In the circuit, link paths LN are provided between all vector address registers within the vector address register groups 45 and 46 and all adders within the adder group 50, and between all increment registers within the increment register groups 47 and 48 and all adders within the adder group 50. The circuit includes decoders 121 and 122 which analize VARN, AAN and SN; and INR, AAN and SN, respectively, supplied from the command execution control circuit 63, and provide signals for enabling ones of paths between the vector address registers and adders, and between the increment registers and adders.

One embodiment of the present invention has been described. The invention is not limited to the foregoing embodiment, but various modifications are possible. For example, changes may be made in any combination in the number of scalar processor units connected to the vector processor unit, the number of vector registers within the vector register groups 43, 44, the number of vector elements stored in one vector register, the number of vector address registers within the vector address register groups 45 and 46, the number of increment registers within the increment register groups 47 and 48, the number of functional units within the functional unit group 49, and the number of adders within the address adder group 50.

An alternative arrangement may include a plurality of combinations each comprising a single vector processor unit and a plurality of scalar processor units and a main memory coupled commonly to said plurality of combination through a common memory controller.

Although, in Fig. 4, the buffer selection circuit 70 is arranged to fetch vector commands from the vector command buffers 41 and 42 alternately after activation signals have been given by both of the scalar processor units 3 and 4, the fetching method is not limited to this. For example, vector commands may be fetched from one vector command buffer for a certain duration or alternatively, if more than two vector command buffers are provided, vector commands may be fetched from these buffers in accordance with priority arbitration.

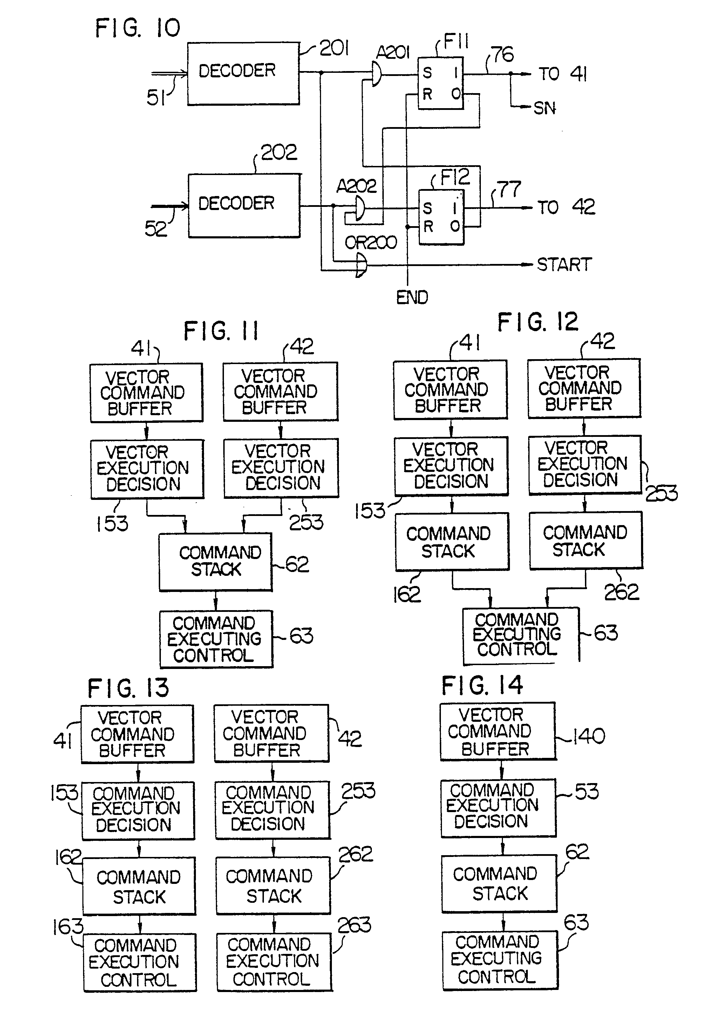

Fig. 10 shows an example of the selection signal generating circuit 71 in Fig. 4 arranged such that vector commands are fetched from only one of vector command buffers for a certain duration. The circuit includes decoders 201 and 202 which analize signals supplied from the scalar processor units 3 and 4 on signal lines 51 and 52, and provide output signals if the input signals indicate the activation of the vector processor unit 5, AND gates A201 and A202, flip-flops F11 and F12 provided for the scalar processors 3 and 4, respectively, and an OR gate OR200. The flip-flops F11 and F12 have their I's output terminals connected to the signal lines 76 and 77, respectively.

In operation, when the above-mentioned activation signal is issued by the scalar processor unit 3, the START signal for initiating the operation of the vector processor unit 5 is outputted from the OR200, and the AND gate 201 is enabled on the condition that the flip-flop F12 is reset, then the flip-flop F11 is set. Consequently, the command buffer 41 receives "1" on the signal line 76, and a vector command to be processed is taken out of the vector command buffer 41. Once the flip-flop F11 is set, the AND gate 202 is not enabled by another activation signal from the scalar processor unit 4, and the flip-flop F12 is not set either. Accordingly, vector commands are taken out of the vector command buffer 41 continuously. After vector process based on a series of vector commands in the vector command buffer 41 and initiated by the START signal has completed, the flip-flop F11 is reset by the vector processing completion signal END issued by the command execution control circuit 63 in Fig. 2.

If, on the other hand, the activation signal is given by the scalar processor unit 4, a signal "1" is sent to the vector command buffer 42 through the signal line 77, so that vector commands are taken out of the vector command buffer 42 selectively and vector processing based on a series of vector commands in the vector command buffer 42 will take place.

In the selection signal generating circuit of Fig. 10, both of the flip-flops F11 and F12 can be set if the scalar processor units 3 and 4 issue the activation signal at the same time. This impropriety can be prevented by the provision of a circuit in each of the scalar processor units 3 and 4 for arbitrating the transmission of the activation signal on the signal lines 51 and 52 by the processor units, or by the provision of a circuit on each of the signal lines 51 and 52 for arbitrating the signal transmission, or by the provision of a delay circuit at the output of the decoder 201 or 202 of the low ranking scalar processor unit.

Although, in the above embodiment, the command execution decision circuit 53 restores the inexecutable vector command to the originating vector command buffer 41 or 42, the circuit 53 may be arranged to operate as follows. The command execution decision circuit 53 holds inexecutable vector command and controls the selection signal generating circuit 71 of Fig. 4 such that the vector command buffer which has sent the inexecutable vector command is disabled and vector commands are fetched from another buffer continuously. And, at a certain time interval or after a certain number of determining operations, the circuit 53 again checks if the held vector command is executable or not and, if it is executable at this time, transfers the vector command to the command stack 62 as usual while enabling the prohibited command buffer, and controls the selection signal generating circuit 71 so that it selects a vector command buffer in the normal procedure. If another inexecutable vector command is detected, it is held, and the same operation as described above will take place.

The provision of the command stack 62 in the foregoing embodiment allows the following control. If by some reason it becomes unnecessary for a vector command stored in the command stack 62 to be executed, it can be cancelled within the command stack 62 so that it will not be executed by the command execution control circuit 63. The cancellation process can be carried out by appending a validity bit to each vector command stored in the command stack 62. In this case, if a cancel request is made for all vector commands in the command stack 62, the validity bits of the all vector commands are reset. When a cancel request is made with designation of a scalar processor unit, vector register, vector address register, increment register, arithmetic/logic (functional) unit, or adder, the validity bits of vector commands having the designated SN, VRN1-VRN3, VARN, INR, ALN, and AAN are reset.

The above is an example of control using the command stack 62, whereas the command stack 62 may be eliminated. Since a vector command sent from the command execution decision circuit 53 can be executed immediately, the command execution control circuit 63 may receive the command directly for execution. In this case, it is not necessary for the command execution decision circuit 53 and command execution control circuit 63 to be independent from each other.

Although, in the foregoing embodiment, arithmetic/logic units and adders within the functional unit group 49 and address adder group 50 are used by vector commands issued by both of the scalar processor units 3 and 4, the arrangement may be made such that some arithmetic/logic units and/or adders are used only by vector commands issued by a predetermined scalar processor unit. This can be achieved by control for the operation unit selection circuit 90 in Fig. 6 and the adder selection circuit 100 in Fig. 7 in such a way that they designate a specific arithmetic/logic unit and adder only if SN received on the signal line 76 in Fig. 4 meets the specified condition.

Although, in the foregoing embodiment, the address adder group 50 for address computation is provided, it may be eliminated. Instead, the vector address register groups 45 and 46, increment register groups 47 and 48, and the signal line 8 are connected to the link path selection circuit 64, so that address computation by the address adder group 50 is carried out by a proper functional unit within the functional unit group 49.

Although, in the foregoing embodiment, the vector address register groups 45 and 46 are provided independently of the increment register groups 47 and 48, the increment registers may be included in the vector address registers. In this case, INRN for commands accompanied by address computation (e.g., LVR command) may be eliminated.

Although, in the foregoing embodiment, the operation of the vector processor unit 5 is initiated by the activation signal issued by the scalar processor unit 3 or 4, this procedure is not always necessary. Instead, the vector command buffers 41 and 42 are provided with a counter indicating the amount of contents or a pointer indicating the storing position, so that storing of a vector command from the scalar processor unit 3 or 4 into the vector command buffer 41 or 42 is detected by the counter or pointer, thereby controlling the initiation of the vector processor unit 5 by itself. In this case the operation may be initiated when a vector command is stored in one of the vector command buffers, or alternatively, the operation may be initiated when the specified number of vector commands are stored in the buffer.

Although, in the foregoing embodiment, two vector command buffers, a command execution decision circuit, a command stack, and a command execution control circuit are provided, these circuit units may be provided in arbitrary number.

Fig. 11 shows the arrangement wherein individual command execution decision circuits 153 and 253 are provided for the scalar processor units 3 and 4, respectively. Fig. 12 shows the arrangement wherein individual command stacks 162 and 262 are provided for the scalar processor units 3 and 4 of Fig. 11. Fig. 13 shows the arrangement wherein individual command execution control circuits 163 and 263 are provided for the scalar processor units 3 and 4 of Fig. 12. Fig. 14 shows the arrangement wherein only one vector command buffer 140 is provided, and this arrangement may be combined with any of the arrangements shown in Figs. 11, 12 and 13.

It will be appreciated that the command execution decision circuits 153 and 253 in Figs. 11, 12 and 13 serve to determine the execution of vector commands from the vector command buffers 41 and 42, respectively, and according, they are connected with respective ones of the vector register groups 43 and 44, vector address register groups 45 and 46, and increment register groups 47 and 48, and connected commonly with the functional unit group 49 and address functional unit group 50. When the command execution decision circuits 153 and 253 operate independently, they contend with each other for functional units within the functional unit group 49 and adders in the address adder group 50, and therefore, a priority arbritration circuit will be required.

Although, in the foregoing embodiment, SN used by the command execution control circuit 63 for designating a vector register group, vector address register group, etc. is appended selectively by the command execution decision circuit 53 depending on the vector command buffer which has sent the vector command, another method as described below may also be employed.

Namely, a specific SN is appended to a vector command when it is sent from the scalar processor unit 3 or 4 to the vector processor unit 5, or a specific SN is appended to a vector command depending on the sourcing unit (scalar processor unit) when it is stored in the vector command buffer. These methods allow the arrangement of single vector command buffer as shown in Fig. 14 to append SN to the vector command. In case a plurality of vector command buffers are provided, a specific SN may be appended to a vector command when it is stored in each vector command buffer, or a specific SN may be appended to a vector command when it is sent out of each vector command buffer. In the cases of Figs. 11, 12 and 13, respective SNs may be appended by the command execution decision circuits 153 and 253. In the case of Fig. 11, a specific SN related to a sourcing unit may be appended to a vector command when it is stored in the command stack 62. In the cases of Figs. 12 and 13, a specific SN may be appended to a vector command when it is outputted from the command stack 162 or 262. In the case of Fig. 12, a specific SN depending on the sourcing unit may be appended to a vector command when it is fetched in the command execution control circuit 63. In the case of Fig. 13, a specific SN may be appended to a vector command when it is fetched in the command execution control circuit 163 or 263.

In the arrangement of Fig. 12, the command execution control circuit 63 can virtually detect SN from the sourcing unit of a vector command. In the arrangement of Fig. 13, vector commands executed by the command execution control circuits 163 and 263 have predetermined fixed SNs. Accordingly, the arrangement of Figs. 12 and 13 may eliminate the operation of appending SN to vector commands.

Although, in the foregoing embodiment, a vector command to be executed by the vector processor unit 5 is given by the scalar processor unit, the arrangement may be made such that the vector processor unit 5 itself fetches commands from the main memory 1 in accordance with address information given by the scalar processor unit.

Although, in the foregoing embodiment, the LIN and LMA commands are executed by the scalar processor units, they may be executed by the vector processor unit 5. In this case, these commands may be read out of the main memory 1 by the scalar processor units and handed over to the vector processor unit 5. Alternatively, the commands may be read out together with a vector command by the vector processor unit 5 itself in accordance with address information given by the scalar processor units. These commands may be stored in the vector command buffer and processed in a manner similar to vector command processing, or they may be processed in a separate system.

Although, in the foregoing embodiment, address control data related to matrices are supplied from the address vector register and increment register, the arrangement may be made such that the command specifies the leading address and constant directly without using these registers. For example, instead of the LVR and STVR commands to have the vector address register descriptor and increment register descriptor, the leading address and constant may be set up, whereby the scalar processor units do not need to execute the LIN and LMA commands.

According to the present invention, as will be appreciated from the above description, the provision of a plurality of scalar processors for one vector processor enhances the utilization of the vector processor, whereby a data processing system with the scalar processing capability which matches the high-speed processing capability of the vector processor can be realized.

## Claims

1. A data processing system comprising a main memory (1),

scalar processing means (3, 4) connected to said main memory for performing scalar operations, said scalar processing means including instruction storage means holding instructions read from said main memory, and at least one scalar instruction execution unit, said instruction storage means including means providing control information for performing vector operations, and

vector processing means (5) connected to said main memory and said scalar processing means and performing vector operations based on said control information received from said scalar processing means,

characterized in that

said vector processing means (5) are connected to a plurality of scalar processing means (3, 4), and

said vector processing means (5) include:

a plurality of groups (43, 44) of vector registers (VR0-VR15), each group (43, 44) including a plurality of vector register (VR0-VR15) the number of said groups being equal to the number of said plurality of scalar processing means, each group (43, 44) of vector registers (VR0-VR15) forming means for holding a plurality of vector elements,

arithmetic and logic operation means (49, 50),

buffer means (41, 42) for buffering control information from said plurality of scalar processing means,

execution control means (53, 62, 63) controlling vector operations on the basis of control information read from said buffer means (41, 42) including information for identifying the scalar processing means which has issued the control information,

connection control means (64; 80 in Fig. 5) controlling on the basis of the control information including said identifying information from said execution control means,

(a) the connection between at least a specified one of said vector registers (VR0-VR15) and said arithmetic and logic means (49) so as to execute vector operations based on said control information, and

(b) the connection between a selected one of said plurality of vector registers (VR0-VR15) and said main memory (1) so as to transfer said vector elements between said main memory (1) and the vector registers (VR0-VR15), and

address means (45, 46, 47, 48) including a plurality of groups (45, 47, 46, 48) of address registers and increment registers each group including a plurality of vector address registers (VAR0-VAR15) and increment registers (INR0-INR15), the number of said groups being equal to the number of said scalar processing means, said vector address registers (VAR0-VAR15) holding addresses of said main memory (1) for transferring vector elements between said main memory (1) and said selected vector registers (VR0-VR15), said increment registers (INR0-INR15) holding values for incrementing the addresses in said vector address registers (VAR0-VAR15), said address means providing said main memory (1) with an address in said vector address register (VAR0-VAR15) designated on the basis of said control information including said identifying information and incrementing the content of said vector address register (VAR0-VAR15) by the content of said increment register (INR0-INR15) designated on the basis of said control information including said identifying information.

2. A data processing system according to claim 1, wherein said buffer means (41, 42) each include a plurality of buffers for receiving and buffering said control information from a specified one of said scalar processing means (3, 4), and said execution control means (53, 62, 63) includes means (53) for deriving control information from one of said buffers at a time.

3. A data processing system according to claim 1, wherein each of said plurality of scalar processing means (3, 4) include means (30, 40) for reading from said main memory (1) a vector instruction for controlling a vector operation and further instruction storage means (21, 31) for holding said vector instruction and where said control information providing means include means (28, 38) for applying said vector instruction to said vector processing means (5) as said control information when said instruction storage means (21, 31) contains said vector instruction.

4. A data processing system according to claim 1, wherein said execution control means (53, 62, 63) includes means (70 in Fig. 4) for reading a vector command from said main memory (1) on the basis of said control information and controls the execution of vector operations indicated by said vector command.

**Patentansprüche**

1. Datenverarbeitungssystem mit einem Hauptspeicher (1),

einer Skalarverarbeitungseinrichtung (3, 4), die mit dem Hauptspeicher zur Ausführung von Skalaroperationen verbunden ist und eine Befehlsspeichereinrichtung, die aus dem Hauptspeicher ausgelesene Befehle speichert, und mindestens eine Skalarbefehlsausführungseinheit enthält, wobei die Befehlsspeichereinrichtung Mittel zur Erzeugung von Steuerinformation für die Durchführung von Vektoroperationen enthält, und

einer Vektorverarbeitungseinrichtung (5), die mit dem Hauptspeicher und der Skalarverarbeitungseinrichtung verbunden ist und Vektoroperationen basierend auf der von der Skalarverarbeitungseinrichtung empfangenen Steuerinformation durchführt,

dadurch gekennzeichnet, daß die Vektorverarbeitungseinrichtung (5) mit mehreren Skalarverarbeitungseinrichtungen (3, 4) verbunden ist und aufweist:

mehrere Gruppen (43, 44) von Vektorregistern (VR0-VR15), wobei jede Gruppe (43, 44) eine Vielzahl von Vektorregistern (VR0-VR15) enthält, die Anzahl der Gruppen gleich der Anzahl der Skalarverarbeitungseinrichtungen ist und jede Gruppe (43, 44) der Vektorregister (VR0-VR15) Mittel zum Halten mehrerer Vektorkomponenten bildet, Arithmetik- und Logikoperationseinrichtungen (49, 50),

Pufferspeichereinrichtungen (41, 42) zum Zwischenspeichern von Steuerinformation von den mehreren Skalarverarbeitungseinrichtungen,

eine Ausführtungssteuereinrichtung (53, 62, 63), die Vektoroperationen auf der Basis von Steterinformation steuert, die aus den Pufferspeichereinrichtungen (41, 42) ausgelesen wurde und die Information zur Identifikation derjenigen Skalarverarbeitungseinrichtung, die die Steuerinformation ausgegeben hat, enthält, eine Verbindungssteuereinrichtung (64, 80 in Fig. 5), die auf der Basis der die Identifikationsinformation enthaltenden Steuerinformation von der Ausführungssteuereinrichtung,

a) die Verbindung zwischen zumindest einem gekennzeichneten Vektorregister (VR0-VR15) und der Arithmetik- und Logikeinrichtung (49) zur Ausführung von Vektoroperationen basierend auf der Steuerinformation, und

b) die Verbindung zwischen einem ausgewählten Vektorregister (VR0-VR15) und dem Hauptspeicher (1) für die Übertragung der Vektorkomponenten zwischen dem Hauptspeicher (1) und den Vektorregistern (VR0-VR15) steuert, und

eine Adressiereinrichtung (45, 46, 47, 48), die mehrere Gruppen (45, 47; 46, 48) von Adressregistern und Inkrementregistern enthält, wobei jede Gruppe eine Vielzahl von Vektoradressregistern (VAR0-VAR15) und Inkrementregistern (INR0-INR15) enthält und die Anzahl der Gruppen gleich der Anzahl der Skalarverarbeitungseinrichtungen ist, die Vektoradressregister (VAR0-VAR15) Hauptspeicheradressen zur Übertragung von Vektorkomponenten zwischen dem Hauptspeicher (1) und dem jeweils ausgewählten Vektorregister (VR0-VR15) halten, die Inkrementregister (INR0-INR15) Werte zum Inkrementieren der Adressen in den Vektoradressregistern (VAR0 VAR15) halten und die Adressiereinrichtung den Hauptspeicher (1) mit einer Adresse in dem Vektoradressregister (VAR0-VAR15) versorgt, die auf der Basis der Steuerinformation einschließlich der Identifikationsinformation angegeben ist, und den Inhalt des jeweiligen Vektoradressregisters (VAR0-VAR15) mit dem Inhalt des Inkrementregisters (INR0-INR15), das auf der Basis der Steuerinformation einschließlich der Identifikationsinformation angegeben ist, inkrementiert.

2. Datenverarbeitungssystem nach Anspruch 1, dadurch gekennzeichnet, daß die Pufferspeichereinrichtungen (41, 42) jeweils mehrere Pufferspeicher zum Empfang und Zwischenspeichern der Steuerinformation von einer gekennzeichneten der Skalarverarbeitungseinrichtungen (3, 4) aufweisen, und die Verarbeitungssteuereinrichtung (53, 62, 63) eine Einrichtung (53) enthält, die zur jeweiligen Zeit aus einem der Pufferspeicher Steuerinformation ableitet.

3. Datenverarbeitungssystem nach Anspruch 1, dadurch gekennzeichnet, daß jede der Skalarverarbeitungseinrichtungen (3, 4) eine Einrichtung (30, 40) zum Lesen eines Vektorbefehls aus dem Hauptspeicher (1) und zum Steuern einer Vektoroperation und weitere Befehlsspeichereinrichtungen (21, 31) aufweist, die den Vektorbefehl halten, wobei die Steuerinformation zur Verfügung stellende Einrichtung Mittel (28, 38) enthält, die den Vektorbefehl der Vektorverarbeitungseinrichtung (5) als Steuerinformation zuführt, wenn die Befehlsspeichereinrichtungen (21, 31) den Vektorbefehl enthalten.

4. Datenverarbeitungseinrichtung nach Anspruch 1, dadurch gekennzeichnet, daß die Ausführungssteuereinrichtung (53, 62, 63) Mittel (70 in Fig. 4) aufweist, die einen Vektorbefehl aus dem Hauptspeicher (1) auf der Basis der Steuerinformation auslesen und die Ausführung der Vektoroperationen, so wie sie der Vektorbefehl angibt, steuern.

**Revendications**

1. Système de traitement de données comportant une mémoire principale (1), des moyens de traitement scalaire (3, 4) reliés à ladite mémoire principale pour effectuer des opérations scalaires, lesdits moyens de traitement scalaire comprenant des moyens de mémoire d'instruction conservant des instructions lues de ladite mémoire principale, et au moins une unité d'exécution d'instruction scalaire, lesdits moyens de mémoire d'instruction comprenant des moyens délivrant une information de commande pour effectuer des opérations vectorielles, et des moyens de traitement vectoriel (5) reliés à ladite mémoire principale et auxdits moyens de traitement scalaire et effectuant des opérations vectorielles en se basant sur ladite information de commande reçue desdits moyens de traitement scalaire, caractérisé en ce que lesdits moyens de traitement vectoriel (5) sont reliés à une pluralité de moyens de traitement scalaire (3, 4), et lesdits moyens de traitement vectoriel (5) comprennent:

une pluralité de groupes (43, 44) de registres vectoriels (VR0-VR15), chaque groupe (43, 44) comprenant une pluralité de registres vectoriels (VR0-VR15), le nombre desdits groupes étant égal au nombre de ladite pluralité de moyens de traitement scalaire, chaque groupe (43, 44) de registres vectoriels (VR0-VR15) constituant des moyens en vue de conserver une pluralité d'éléments vectoriels,

des moyens d'opérations arithmétiques et logiques (49, 50),

des moyens de mémoire tampon (41, 42) pour conserver l'information de commande provenant de ladite pluralité des moyens de traitement scalaires,

des moyens de commande d'exécution (53, 62, 63) commandant des opérations vectorielles sur la base de l'information de commande lue à partir desdits moyens de mémoire tampon (41, 42) comprenant une information en vue d'identifier les moyens de traitement scalaire qui ont délivré l'information de commande,

des moyens de commande de liaison (64, 80 sur la Figure 5) commandant sur la base de l'information de commande comprenant ladite information d'identification provenant desdits moyens de commande d'exécution,

(a) la liaison entre au moins l'un spécifié desdits registres vectoriels (VR0-VR15) et lesdits moyens arithmétiques et logiques (49) de façon à exécuter des opérations vectorielles en se basant sur ladite information de commande, et

(b) la liaison entre l'un choisi de ladite pluralité de registres vectoriels (VR0-VR15) et ladite mémoire principale (1) de manière à transférer lesdits éléments vectoriels entre ladite mémoire principale (1) et les registres vectoriels (VR0-VR15), et

des moyens d'adresse (45, 46, 47, 48) comprenant une pluralité de groupes (45, 47; 46, 48) de registres d'adresse et de registres d'incrément, chaque groupe comprenant une pluralité de registres d'adresse vectorielle (VAR0-VAR15) et de registres d'incrément (INR0-INR15), le nombre desdits groupes étant égal au nombre desdits moyens de traitement scalaire, lesdits registres d'adresse vectorielle (VAR0-VAR15) conservant des adresses de ladite mémoire principale (1) pour transférer des éléments vectoriels entre ladite mémoire principale (1) et lesdits registres vectoriels choisis (VR0-VR15), lesdits registres d'incrément (INR0-INR15) conservant des valeurs pour incrémenter les adresses dans lesdits registres d'adresse vectorielle (VAR0-VAR15), lesdits moyens d'adresse délivrant à ladite mémoire principale (1) une adresse dans ledit registre d'adresse vectorielle (VAR0-VAR15) désignée sur la base de ladite information de commande comprenant ladite information d'identification et incrémentant le contenu dudit registre d'adresse vectorielle (VAR0-VAR15) du contenu dudit registre d'incrément (INR0-INR15) désigné sur la base de ladite information de commande comprenant ladite information d'identification.

2. Système de traitement de données selon la revendication 1, dans lequel lesdits moyens de mémoire tampon (41, 42) comprennent chacun une pluralité de mémoires tampons en vue de recevoir et de conserver ladite information de commande provenant d'un spécifié desdits moyens de traitement scalaire (3, 4), et lesdits moyens de commande d'exécution (53, 62, 63) comprennent des moyens (53) pour prélever une information de commande de l'une desdites mémoires tampons à la fois.

3. Système de traitement de données selon la revendication 1, dans lequel chacun de ladite pluralité des moyens de traitement scalaire (3, 4) comprend des moyens (30, 40) pour lire à partir de ladite mémoire principale (1) une instruction vectorielle en vue de commander une opération vectorielle et en outre des moyens de mémoire d'instruction (21, 31) pour conserver ladite instruction vectorielle et dans lequel lesdits moyens délivrant l'information de commande comprennent des moyens (28, 38) en vue d'appliquer ladite instruction vectorielle auxdits moyens de traitement vectoriel (5) en tant qu'information de commande lorsque lesdits moyens de mémoire d'instruction (21, 31) contiennent ladite instruction vectorielle.

4. Système de traitement de données selon la revendication 1, dans lequel lesdits moyens de commande d'exécution (53, 62, 63) comprennent des moyens (70 sur la Figure 4) en vue de lire une commande vectorielle provenant de ladite mémoire principale (1) sur la base de ladite information de commande et commandant l'exécution d'opérations vectorielles indiquées par ladite commande vectorielle.

FIG. 1

F I G. 2

FIG. 3

| O P | VRN 1 | VRN2 | VRN3 | VARN | INRN | ALN | A A N | SN |
|-----|-------|------|------|------|------|-----|-------|-----|

FIG. 4

3

# FIG. 5

# FIG. 7

# FIG. 6

# FIG. 8

# FIG. 9

# FIG. 10

# FIG. 11

# FIG. 12

# FIG. 13

# FIG. 14